(19) Europäisches Patentamt
European Patent Office
Office européen des brevets

(11) **EP 2 623 915 B1**

(12) **EUROPEAN PATENT SPECIFICATION**

(45) Date of publication and mention
of the grant of the patent:
**26.02.2020 Bulletin 2020/09**

(21) Application number: **11829118.6**

(22) Date of filing: **27.09.2011**

(51) Int Cl.:
*F28F 9/02* *(2006.01)*        *B23K 1/00* *(2006.01)*
*F28D 1/053* *(2006.01)*        *F28F 9/18* *(2006.01)*
*B23K 101/14* *(2006.01)*        *B23K 103/10* *(2006.01)*
*B23K 1/20* *(2006.01)*          *F28F 1/02* *(2006.01)*
*F28D 21/00* *(2006.01)*

(86) International application number:
**PCT/JP2011/072084**

(87) International publication number:
**WO 2012/043565 (05.04.2012 Gazette 2012/14)**

(54) **HEAT EXCHANGER**

WÄRMETAUSCHER

ÉCHANGEUR DE CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2011   JP 2011170554
29.09.2010   JP 2010219598**

(43) Date of publication of application:
**07.08.2013   Bulletin 2013/32**

(73) Proprietor: **Daikin Industries, Ltd.
Osaka 530-8323 (JP)**

(72) Inventors:
• **YOSHIOKA, Shun**
  **Sakai-shi, Osaka 591-8511 (JP)**
• **HYOUDOU, Takayuki**
  **Sakai-shi, Osaka 591-8511 (JP)**
• **KAJI, Ryuhei**
  **Sakai-shi, Osaka 591-8511 (JP)**

• **SHIRAISHI, Yoshikazu**
  **Sakai-shi, Osaka 591-8511 (JP)**
• **FUJIWARA, Akihiro**
  **Sakai-shi, Osaka 591-8511 (JP)**
• **LIU, Jihong**
  **Sakai-shi, Osaka 591-8511 (JP)**

(74) Representative: **Hoffmann Eitle
Patent- und Rechtsanwälte PartmbB
Arabellastraße 30
81925 München (DE)**

(56) References cited:
**EP-A1- 1 780 489        EP-A1- 2 090 851
EP-A1- 2 108 909        WO-A1-2005/108899
WO-A1-2006/064823        FR-A1- 2 851 331
JP-A- 2005 351 520        JP-A- 2005 513 402
JP-A- 2010 139 088        US-A1- 2005 284 621
US-A1- 2008 223 566        US-B2- 6 827 139**

**Description**

**TECHNICAL FIELD**

The present invention relates to a heat exchanger.

**BACKGROUND ART**

Conventionally, there has been proposed a layered heat exchanger which, like the one described in patent citation 1 (JP-A No. 2006-284133), is equipped with headers that extend in a vertical direction and plural flat tubes that extend in a direction orthogonal to the length of the headers and are inserted into the headers, with the heat exchanger performing heat exchange between refrigerant flowing through plural holes formed in the flat tubes and air flowing outside the flat tubes in a width direction (transverse direction) of the flat tubes.
In addition, document JP 2010-139088 A discloses a heat exchanger as defined in the preamble of claim 1.
Also, document EP 2 108 909 A1 discloses a conventional heat exchanger having headers arranged to extend in a horizontal direction. Document US 2008/0223566 A1 describes a heat exchanger according to the preamble of claim 1.

**SUMMARY OF INVENTION**

<Technical Problem>

In a heat exchanger like the one described in patent document JP2006284133 A, improving the pressure-resistant strength is required in a case where, for example, high-pressure refrigerant (e.g., $CO_2$ refrigerant) flows through it. As a measure for improving the pressure-resistant strength of the headers, reducing the diameter of the headers themselves is conceivable. However, when the diameter of the headers themselves is reduced, the width of the flat tubes is reduced in accompaniment therewith, so there is concern that this will have an impact on the performance of the heat exchanger. On the other hand, when the diameter of the headers is designed to match the width of the flat tubes, there is concern that the diameter of the headers will be unable to be reduced, which is not preferred from the standpoint of improving the pressure-resistant strength.
Further, in a heat exchanger of this configuration in which the flat tubes are inserted into the inside space of the headers through which the refrigerant mainly travels, there is concern that the pressure loss of the refrigerant will occur inside the headers.
Thus, the object of the present invention is to provide a heat exchanger that can achieve both improving the pressure-resistant strength of the headers and suppressing the pressure loss of the refrigerant.

<Solution to Problem>

A heat exchanger according to the present invention is equipped with a pair of headers and plural flat tubes. The headers are arranged to extend in an up-and-down direction and refrigerant flows inside them. The plural flat tubes extend in a direction intersecting a longitudinal direction of the headers and are connected to the headers at different height positions. Each of the headers has a first member and a flat tube holding member. The first member has formed therein a main flow path and refrigerant connection flow paths. The main flow path is arranged to extend in the up-and-down direction and refrigerant flows through it. The refrigerant connection flow paths extend from the main flow path to an end surface in the direction in which the flat tubes are positioned in order to circulate the refrigerant between the main flow path and plural refrigerant flow paths formed in the flat tubes. End portions of the flat tubes are adhered to the flat tube holding member, and the flat tube holding member holds the flat tubes. Additionally, intermediate flow paths that interconnect the refrigerant connection flow paths and the plural refrigerant flow paths in the flat tubes are formed in the headers and/or the flat tubes. The first member has a first portion, which extends in the vertical direction and has a shape in transverse cross section having a circular arc and in which shape the end portions of that circular arc are joined by a straight line; a second portion, which has an elongated flat shape extending in the vertical direction; and recessed portion spaces formed by the first portion and the second portion. The cross section of the first member orthogonal to the longitudinal direction of the first member is Ω-shaped. The flat tube holding member is bent inward in such a way as to cover both width direction end portions of the second portion of the first member. The inwardly bent end portions of the flat tube holding member are positioned in the recessed portion spaces.
Here, for example, when a heat exchanger is given a configuration in which the flat tubes are inserted into the headers, there is concern that the pressure loss of the refrigerant will occur.
Thus, in the heat exchanger pertaining to the present invention, the flat tubes are held using the flat tube holding member that is separate from the first member having formed therein the main flow path through which the refrigerant flows. That is, a configuration in which the flat tubes are not inserted into the main flow path is employed. Because of this, the pressure loss of the refrigerant can be suppressed. Because of the refrigerant connection flow paths and the intermediate flow paths that are separate from the main flow path, the refrigerant flowing through the main flow path flows to the refrigerant flow paths in the flat tubes.

Further, when this configuration is employed, the diameter of the main flow path does not have to match the width of the flat tubes because the flat tubes do not have to be inserted into the main flow path. Therefore, the diameter of the section of the main flow path through which the refrigerant travels can be reduced and the pressure-resistant strength can be improved.

A heat exchanger pertaining to a second aspect of the present invention is the heat exchanger according to the present invention, wherein the width of the intermediate flow paths is equal to or less than the width of the flat tubes.

In the heat exchanger pertaining to the second aspect of the present invention, the width of the intermediate flow paths is equal to or less than the width of the flat tubes, so the longitudinal direction end surfaces of the flat tubes come into contact with the peripheries of intermediate flow path forming portions forming the intermediate flow paths. Because of this, the positioning of the flat tubes can be performed easily.

A heat exchanger pertaining to a third aspect of the present invention is the heat exchanger according to the present invention or the second aspect of the present invention, wherein each of the headers further has a second member that is sandwiched between the first member and the flat tube holding member. Additionally, in a case where the intermediate flow paths are formed in the headers and the flat tubes or the headers, the intermediate flow paths are formed in the second member.

In the heat exchanger pertaining to the third aspect of the present invention, both improving the pressure-resistant strength of the headers and suppressing the pressure loss of the refrigerant can be achieved.

A heat exchanger pertaining to a fourth aspect of the present invention is the heat exchanger pertaining to the third aspect of the present invention and is further equipped with a securing member. The securing member is sandwiched between the flat tube holding member and the second member and secures the end portions of the plural flat tubes together with the flat tube holding member.

In the heat exchanger pertaining to the fourth aspect of the present invention, the flat tubes can be more stably secured.

A heat exchanger pertaining to a fifth aspect of the present invention is the heat exchanger pertaining to the fourth aspect of the present invention, wherein the second member and the securing member have flat panel shapes.

In the heat exchanger pertaining to the fifth aspect of the present invention, for example, in the case of securing the flat tubes by forming holes in the securing member and putting the flat tubes into those holes, construction is easy to execute because the securing member with a flat panel shape enables that the holes can be formed all at once in the securing member. Further, likewise in the case of forming the intermediate flow paths in the second member also, construction is easy to execute because the holes can be formed all at once in the second member.

A heat exchanger pertaining to a sixth aspect of the present invention is the heat exchanger pertaining to the fourth aspect or the fifth aspect of the present invention, wherein the flat tube holding member covers the second member or the second member and the securing member from outside, and both ends of the flat tube holding member are in contact with and brazed to the first member.

In the heat exchanger pertaining to the sixth aspect of the present invention, the second member and the securing member can be easily secured by the flat tube holding member.

A heat exchanger pertaining to a seventh aspect of the present invention is the heat exchanger according to the present invention or any of the second aspect to the sixth aspect of the present invention, wherein plural holes are formed in the flat tube holding member.

Here, for example, in the case of connecting the flat tube holding member and the flat tubes and connecting the flat tube holding member and the second member, a flux is applied. Thereafter, in the case of connecting these by brazing or the like, it is assumed that the flux will volatilize.

Thus, in the heat exchanger pertaining to the seventh aspect of the present invention, the plural holes are formed in the flat tube holding member. Because of this, volatilized gas can be removed. Consequently, airtightness between connected members can be ensured.

A heat exchanger pertaining to an eighth aspect of the present invention is the heat exchanger according to the present invention or any of the second aspect to the seventh aspect of the present invention, wherein the length, in a direction orthogonal to a longitudinal direction of the first member, of a main flow path forming portion forming the main flow path is smaller than the width of the flat tubes.

In the heat exchanger pertaining to the eighth aspect of the present invention, the length, in the direction orthogonal to the longitudinal direction of the first member, of the main flow path forming portion forming the main flow path can be made smaller than the width of the flat tubes because the flat tubes do not have to be inserted into the main flow path.

<Advantageous Effects of Invention>

In the heat exchanger according to the present invention, both improving the pressure-resistant strength of the headers and suppressing the pressure loss of the refrigerant can be achieved.

In the heat exchanger pertaining to the second aspect of the present invention, the positioning of the flat tubes can be performed easily.

In the heat exchanger pertaining to the third aspect of the present invention, both improving the pressure-resistant strength of the headers and suppressing the pressure loss of the refrigerant can be achieved.

In the heat exchanger pertaining to the fourth aspect of the present invention, the flat tubes can be more stably secured.

In the heat exchanger pertaining to the fifth aspect of the present invention, construction is easy to execute.

In the heat exchanger pertaining to the sixth aspect of the present invention, the second member and the securing member can be easily secured by the flat tube holding member.

In the heat exchanger pertaining to the seventh aspect of the present invention, airtightness between connected members can be ensured.

In the heat exchanger pertaining to the eighth aspect of the present invention, the length, in the direction orthogonal to the longitudinal direction of the first member, of the main flow path forming portion forming the main flow path can be made smaller than the width of the flat tubes because the flat tubes do not have to be inserted into the main flow path.

## BRIEF DESCRIPTION OF DRAWINGS

FIG. 1 is a schematic configuration diagram of a heat exchanger (details regarding headers are not shown).

FIG. 2 is an enlarged view of section II of FIG. 1.

FIG. 3 is a plan view of a first header and flat tubes in a case where an upper end member has been removed.

FIG. 4 is a longitudinal cross-sectional view in a case where the first header and the flat tubes in a case where the upper end member and a lower end member have been removed are cut along line IV-IV shown in FIG. 3.

FIG. 5 is a longitudinal cross-sectional view in a case where a first member is cut along line V-V shown in FIG. 3.

FIG. 6 is a schematic perspective view of part of the first member.

FIG. 7 is a longitudinal cross-sectional view in which a flat tube holding member is cut along a cutting line that is parallel, in the longitudinal direction of the flat tube holding member, to line V-V shown in FIG. 3.

FIG. 8 is a longitudinal cross-sectional view in which a second member is cut along a cutting line that is parallel, in the longitudinal direction of the second member, to line V-V shown in FIG. 3.

FIG. 9 is a graph showing the relationship between constants $C_1$ and $C_2$ and flow dividing ability.

FIG. 10 is a longitudinal cross-sectional view showing the flat tube holding member pertaining to modification 1A.

FIG. 11 is a plan view, pertaining to modification 1C, of the first header and the flat tube in a case where the upper end member has been removed.

FIG. 12 is a side view, pertaining to modification 1C, of the first member as seen from the side of the flat tubes.

FIG. 13 is a plan view, pertaining to modification 1D, of the first header and the flat tubes in a case where the upper end member has been removed.

FIG. 14 is a side view, pertaining to modification 1D, of the first member as seen from the side of the flat tubes.

FIG. 15 is a plan view, pertaining to modification IE, of the first header and the flat tubes in a case where the upper end member has been removed.

FIG. 16 is a plan view, pertaining to modification IF, of the first header and the flat tubes in a case where the upper end member has been removed.

FIG. 17 is a plan view, pertaining to modification 1G, of the first header and the flat tubes in a case where the upper end member has been removed.

FIG. 18 is a plan view, pertaining to a second embodiment, of the first header and the flat tubes in a case where the upper end member has been removed.

FIG. 19 is a longitudinal cross-sectional view, pertaining to the second embodiment, in a case where the first header and the flat tubes in a case where the upper end member and the lower end member have been removed are cut along line XIX-XIX shown in FIG. 18.

FIG. 20 is a longitudinal cross-sectional view in a case where a securing member is cut along line XX-XX shown in FIG. 18.

## DESCRIPTION OF EMBODIMENTS

A heat exchanger 1 pertaining to embodiments of the present invention will be described below with reference to the drawings.

<First Embodiment>

(1) Configuration of Heat Exchanger 1

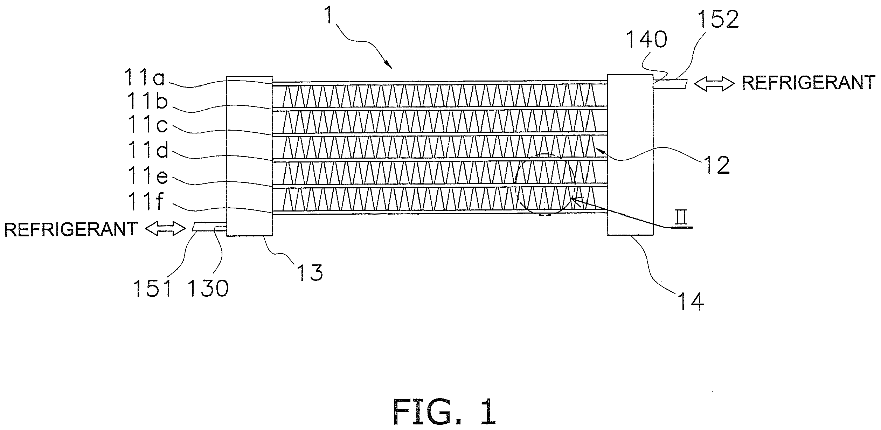

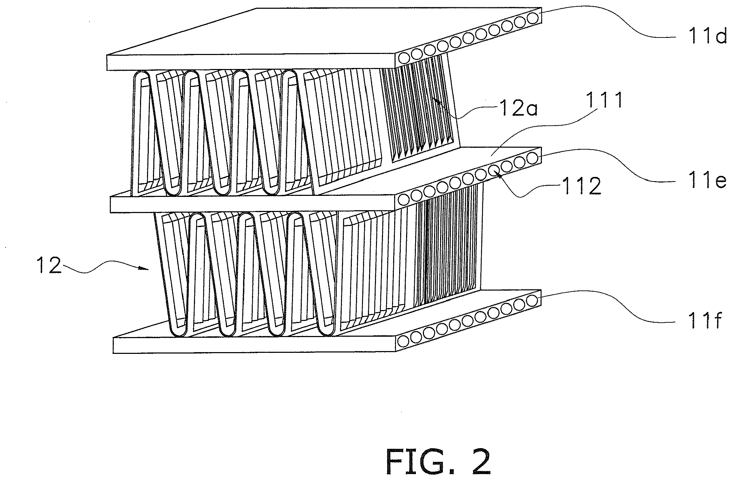

FIG. 1 is a schematic configuration diagram of the heat exchanger 1. FIG. 2 is an enlarged view of section II of FIG. 1.

The heat exchanger 1 is a heat exchanger that uses air as a cooling source or a heating source to condense or evaporate refrigerant, and the heat exchanger 1 is, for example, employed as a heat exchanger that configures a refrigerant circuit of a vapor compression refrigeration apparatus. Here, carbon dioxide refrigerant is used as the refrigerant circulating through the refrigerant circuit.

As shown in FIG. 1 and FIG. 2, the heat exchanger 1 mainly has plural flat tubes 11a to 11f, heat transfer fins 12, and a pair of headers 13 and 14. These will be described below.

(1-1) Flat Tubes 11a to 11f

Each of the flat tubes 11a to 11f is formed by extruding a metal member made of aluminum or an aluminum alloy, for example. The flat tubes 11a to 11f extend long in a direction intersecting (specifically, a direction orthogonal to) the longitudinal direction of the later-described headers 13 and 14, and as shown in FIG. 2, the flat tubes 11a to 11f are disposed a predetermined interval apart from each other in the up-and-down direction in a state in which long and wide planar portions 111 face the up-and-down direction (the longitudinal direction of the headers 13 and 14). Plural refrigerant flow paths 112 are formed inside each of the flat tubes 11a to 11f, and the refrigerant flows in these refrigerant flow paths 112. Specifically, the plural refrigerant flow paths 112 are formed side by side in the transverse direction of the flat tubes 11a to 11f in such a way as to penetrate the flat tubes 11a to 11f in the longitudinal direction of the flat tubes 11a to 11f.

Here, six flat tubes are disposed, but the number of the flat tubes is not limited to this.

(1-2) Heat Transfer Fins 12

The heat transfer fins 12 are corrugated fins configured from metal members made of aluminum or an aluminum alloy, and formed as a result of panel-like members being folded in corrugated shapes in their longitudinal direction. The heat transfer fins 12 are disposed in spaces sandwiched by the flat tubes 11a to 11f. The mountain fold sections on the upper ends of the heat transfer fins 12 are joined by brazing or the like to the undersurfaces of the planar portions 111, and the valley fold sections on the lower ends of the heat transfer fins 12 are joined by brazing or the like to the upper portions of the planar portions 111. Further, plural cut-and-raised portions 12a for improving heat exchange efficiency are cut and raised in louver shapes in the heat transfer fins 12. The cut-and-raised portions 12a are formed in such a way that their directions of inclination with respect to the air flow direction are opposite between the sections on the upstream side and the sections on the downstream side in the air flow direction (the flow direction of air flowing in the transverse direction (width direction) of the flat tubes 11a to 11f).

(1-3) Headers 13 and 14

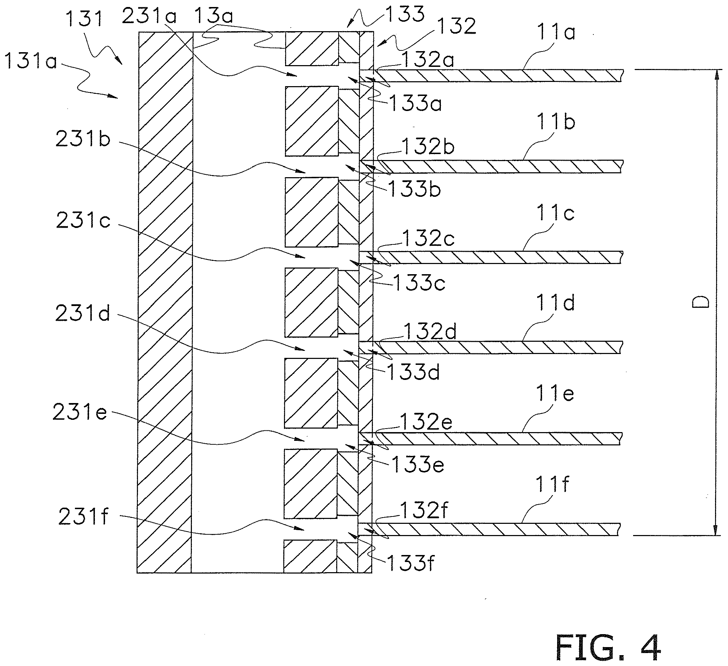

As shown in FIG. 1, the headers 13 and 14 are members that are spaced apart from each other and extend in the up-and-down direction (specifically, the vertical direction). Flat tube-use holes (included among these are later-described flat tube-use holes 132a to 132f (see FIG. 4) in the first header 13) for connecting the plural flat tubes 11a to 11f to the headers 13 and 14 are formed in the outer surfaces of the headers 13 and 14 at different height positions (specifically, a predetermined interval apart from each other) along the longitudinal direction of the headers 13 and 14. Additionally, both longitudinal direction end portions of each of the flat tubes 11a to 11f extending in the direction orthogonal to the longitudinal direction of the headers 13 and 14 are inserted into these flat tube-use holes. The flat tube-use holes are formed by stamping or the like.

The headers 13 and 14 have a support function of supporting the flat tubes 11a to 11f, an inflow function of allowing the refrigerant to flow into the flat tubes 11a to 11f (specifically, the plural refrigerant flow paths 112 formed in the flat tubes 11a to 11f), and a merge function of allowing the refrigerant flowing out from the flat tubes 11a to 11f (specifically, the plural refrigerant flow paths 112 formed in the flat tubes 11 a to 11f) to merge.

In the description below, for convenience of description, the header on the left side in FIG. 1 will be called "the first header 13" and the header on the right side in FIG. 1 will be called "the second header 14". The configuration of the headers 13 and 14 is not limited to the configuration shown in FIG. 1, and a variety of configurations can be applied.

The first header 13 is a cylindrical member that has an outer peripheral portion in which an opening 130 is formed and an upper end and lower end that are closed and extends in the up-and-down direction. The opening 130 has the function of allowing the refrigerant to flow into the first header 13 or allowing the refrigerant to flow outside from the first header 13. Specifically, the opening 130 becomes an inlet for the refrigerant in a case where the heat exchanger 1 functions as an evaporator of the refrigerant and becomes an outlet for the refrigerant in a case where the heat exchanger 1 functions as a condenser of the refrigerant.

The second header 14 is a tubular member that has an outer peripheral portion in which an opening 140 is formed and an upper end and lower end that are closed and extends in the up-and-down direction. The opening 140 has the function of allowing the refrigerant to flow into the second header 14 or allowing the refrigerant to flow outside from the second header 14. Specifically, the opening 140 becomes an inlet for the refrigerant in a case where the heat exchanger 1 functions as a condenser of the refrigerant and becomes an outlet for the refrigerant in a case where the heat exchanger 1 functions as an evaporator of the refrigerant.

The opening 130 and the opening 140 are formed by stamping or the like. Further, pipes 151 and 152 through which the refrigerant flows are connected to the opening 130 and the opening 140.

(2) Regarding the Specific Configuration of the Headers 13 and 14

The first header 13 and the second header 14 have the same configuration. Therefore, in the description below, only the configuration of the first header 13 will be described and description of the configuration of the second header 14 will be omitted.

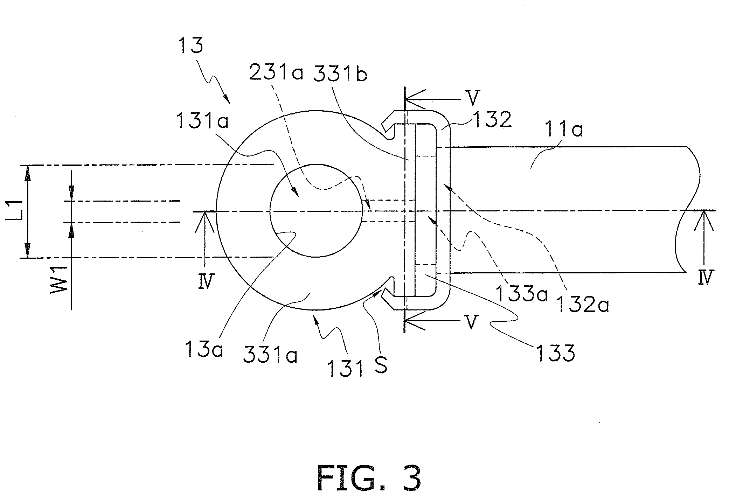

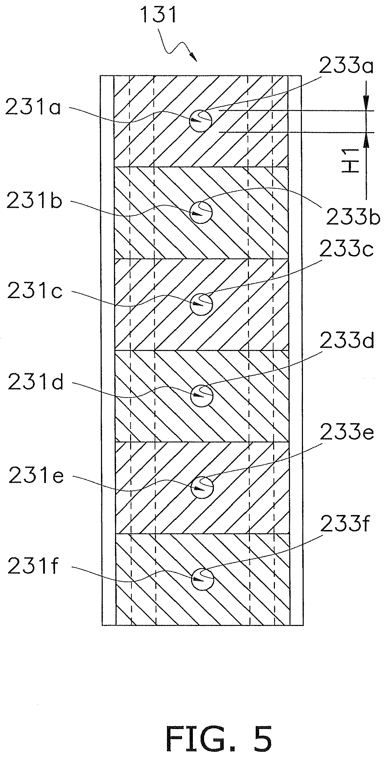

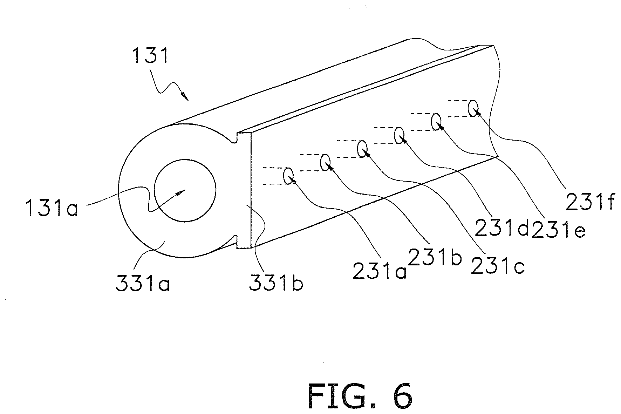

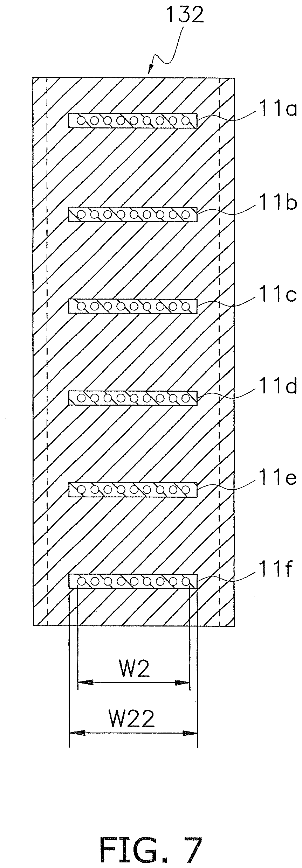

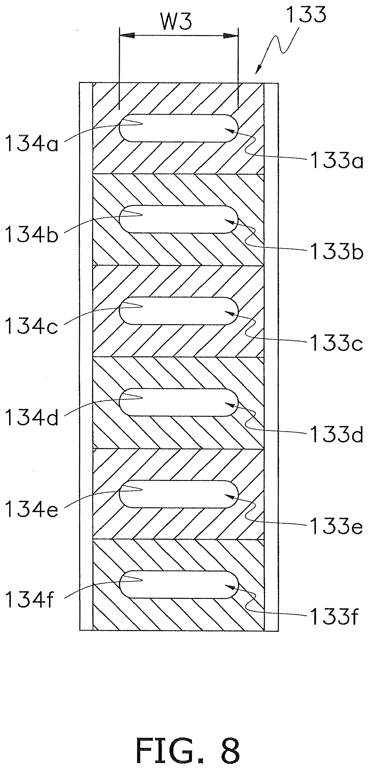

FIG. 3 is a plan view of the first header 13 and the flat tubes in a case where an upper end member has been removed. FIG. 4 is a longitudinal cross-sectional view in which the first header 13 and the flat tubes 11a to 11f in a case where the upper end member and a lower end member have been removed are cut along line IV-IV shown in FIG. 3. FIG. 5 is a longitudinal cross-sectional view in a case where a first member 131 is cut along line V-V shown in FIG. 3. FIG. 6 is a schematic perspective view of part of the first member 131. FIG. 7 is a longitudinal cross-sectional view in which a flat tube holding member 132 is cut along a cutting line that is parallel, in the longitudinal direction of the flat tube holding member 132, to line V-V shown in FIG. 3. FIG. 8 is a longitudinal cross-sectional view in which a second member 133 is cut along a cutting line that is parallel, in the longitudinal direction of the second member 133, to line V-V shown in FIG. 3.

As shown in FIG. 3 to FIG. 8, the first header 13 mainly has a first member 131, a flat tube holding member 132, and a second member 133. These members will be specifically described below.

(2-1) First Member 131

The first member 131 is a member that extends in the vertical direction and is configured from a metal member such as clad metal comprising an aluminum alloy with a low melting point bonded to the surface of another aluminum alloy serving as a core. As shown in FIG. 3 and FIG. 6, the first member 131 has a shape in which a cylinder and a cuboid are combined. The cross section of the first member 131 orthogonal to the longitudinal direction of the first member 131 is Ω-shaped (a shape having about 3/4 of a circular arc, in which end portions of that circular arc are joined by a straight line and in which a quadrilateral is connected to that straight line section).

Specifically, the first member 131 has a first portion 331a, which extends in the vertical direction and has a shape in transverse cross section having about 3/4 of a circular arc and in which shape end portions of that circular arc are joined by a straight line, and a second portion 331b, which has an elongated flat shape that extends in the vertical direction.

As shown in FIG. 3, FIG. 4, and FIG. 6, a refrigerant main flow path 131a that penetrates the first member 131 (specifically, the first portion 331a) in the up-and-down direction (specifically, the vertical direction) and through which the refrigerant mainly flows is formed in the first member 131 (specifically, the first portion 331a). The cross section (transverse cross section) of the refrigerant main flow path 131a orthogonal to the longitudinal direction of the refrigerant main flow path 131a has a circular shape. A length L1 (see FIG. 3), in a direction orthogonal to the longitudinal direction of the first member 131, of a refrigerant main flow path forming portion 13a (see FIG. 3 and FIG. 4) forming the refrigerant main flow path 131a is 10 mm. Further, the thickness of the first member 131 (the distance between the inner surface of the refrigerant main flow path forming portion 13a and the outer surface of the first portion 331a) is preferably 3 mm to 6 mm.

Further, refrigerant connection flow paths 231a to 231f that are in communication with refrigerant main flow path 131a, extend to an end surface in the direction in which the flat tubes 11a to 11f are positioned (the direction orthogonal to the longitudinal direction of the first member 131), and penetrate the first member 131 are formed in the first member 131 in order to circulate the refrigerant with the plural refrigerant flow paths 112 formed in the flat tubes 11a to 11f. The refrigerant connection flow paths 231a to 231f are formed a predetermined interval apart from each other along the longitudinal direction of the first member 131. As shown in FIG. 6, the cross sections of the refrigerant connection flow paths 231a to 231f cut in the longitudinal direction of the first member 131 (the vertical direction) have circular shapes. The refrigerant connection flow paths 231a to 231f are formed by drilling. A height H1 of the refrigerant connection flow paths 231a to 231f (specifically, refrigerant connection flow path forming portions 233a to 233f (see FIG. 5) forming the refrigerant connection flow paths 231a to 231f) is larger than the thickness of the flat tubes 11a to 11f.

(2-2) Flat Tube Holding Member 132

The flat tube holding member 132 is a member to which the end portions of the flat tubes 11a to 11f are connected (adhered) and which holds the flat tubes 11a to 11f. The flat tube holding member 132 is a member that is configured from a metal member such as clad metal and extends in the vertical direction. As shown in FIG. 3, in a regularly assembled state, the transverse cross section of the flat tube holding member 132 (the cross section orthogonal to the longitudinal direction of the flat tube holding member 132) has a "U" shape whose end portions are bent inward.
In a regularly assembled state, the flat tube holding member 132 is bent inward in such a way as to cover both width direction end portions of the second portion 331b of the first member 131. According to the invention, the inwardly bent end portions of the flat tube holding member 132 are positioned in recessed portion spaces S formed by the first portion 331a and the second portion 331b of the first member 131.
As shown in FIG. 3 and FIG. 4, plural flat tube-use holes 132a to 132f for inserting the plural flat tubes 11a to 11 f and holding the flat tubes 11a to 11f are formed in the flat tube holding member 132. The flat tube-use holes 132a to 132f are formed by stamping or the like. The flat tube-use holes 132a to 132f are formed a predetermined interval apart from each other along the longitudinal direction of the flat tube holding member 132. The height of the flat tube-use holes 132a to 132f is formed a little smaller than the thickness of the flat tubes 11a to 11f. Therefore, by inserting the flat tubes 11a to 11f into the flat tube-use holes 132a to 132f, the flat tubes 11a to 11f are held.
In a state in which the flat tubes 11a to 11f are normally attached to the flat tube holding member 132, the end surfaces of the flat tubes 11a to 11f on the inserted sides and the end surface of the flat tube holding member 132 on the first member 131 side are positioned in substantially the same position.
FIG. 7 shows a longitudinal cross-sectional view of the flat tube holding member 132 in a state in which the flat tubes 11a to 11f are normally attached to the flat tube holding member 132.

(2-3) Second Member 133

As shown in FIG. 3 and FIG. 4, the second member 133 is a member having one end surface adhered to the first member 131 (specifically, the end surface of the second portion 331b) and another end surface adhered to the end surface of the flat tube holding member 132. That is, the second member 133 is sandwiched between the first member 131 and the flat tube holding member 132.
The second member 133 is configured from a metal member such as clad metal (clad metal with a higher melting point than that of other members is used for the clad metal forming the second member 133) and has a long and narrow flat panel shape extending in the vertical direction. The transverse cross section of the second member 133 has a quadrilateral shape.
As shown in FIG. 4 and FIG. 8, intermediate flow paths 133a to 133f that penetrate the second member 133 in a direction orthogonal to the longitudinal direction of the second member 133 are formed in the second member 133. As shown in FIG. 8, the intermediate flow paths 133a to 133f have longitudinal cross sections having transversely long and narrow oval shapes. As shown in FIG. 4 and FIG. 8, the plural intermediate flow paths 133a to 133f are formed a predetermined interval apart from each other along the longitudinal direction of the second member 133. Additionally, the plural intermediate flow paths 133a to 133f are in communication with the refrigerant connection flow paths 231a to 231f formed in the first member 131 and the plural refrigerant flow paths 112 formed in the flat tubes 11a to 11f.
That is, the second member 133 has the function of enabling the circulation of the refrigerant between the first member 131 having formed therein a flow path (specifically, the refrigerant main flow path 131a) through which the refrigerant mainly travels and the plural refrigerant flow paths 112 formed in the flat tubes 11a to 11f. Specifically, the second member 133 has the function of enabling the circulation of the refrigerant between the plural refrigerant flow paths 112 formed in the flat tubes 11a to 11f and the refrigerant main flow path 131a and refrigerant connection flow paths 231a to 231f formed in the first member.
The height of the intermediate flow paths 133a to 133f (specifically, the height of intermediate flow path forming portions 134a to 134f forming the intermediate flow paths 133a to 133f) is larger than the thickness of the flat tubes 11a to 11f and is larger than the height H1 of the refrigerant connection flow paths 231a to 231f (specifically, the refrigerant connection flow path forming portions 233a to 233f). This is to facilitate the circulation of the refrigerant between the first header 13 and the flat tubes 11a to 11f.

Further, a width W3 of the intermediate flow paths 133a to 133f (specifically, a width W3 of the intermediate flow path forming portions 134a to 134f forming the intermediate flow paths 133a to 133f) is equal to or less than a width W22 of the flat tubes 11a to 11f (see FIG. 7).

(3) Regarding Method of Manufacturing the Heat Exchanger 1

A method of manufacturing the heat exchanger 1 not part of the present invention will be described below. In the description below also, description of the second header 14 will be omitted.

First, the first member 131 is formed. Specifically, a long and narrow cylinder-shaped member having an open space (specifically, the refrigerant main flow path 131a) inside is formed by processing (e.g., extruding) clad metal comprising an aluminum alloy with a low melting point bonded to the surface of another aluminum alloy serving as a core. Then, holes (specifically, the refrigerant connection flow paths 231a to 231f) that penetrate the member with the cylindrical shape in a direction orthogonal to the longitudinal direction of the member with the cylindrical shape from the inside space are formed in the cylinder-shaped member by drilling. The holes are formed a predetermined interval apart from each other along the longitudinal direction of the cylinder-shaped member. Because of this, the first member 131 having formed therein the refrigerant main flow path 131a and the refrigerant connection flow paths 231a to 231f is formed.

Next, the second member 133 is formed. Specifically, plural holes (specifically, the intermediate flow paths 133a to 133f) are formed in flat panel-shaped clad metal at a predetermined interval apart from each other along the longitudinal direction of the flat panel-shaped clad metal by stamping. Because of this, the second member 133 having formed therein the intermediate flow paths 133a to 133f is formed.

Next, holes (specifically, the flat tube-use holes 132a to 132f) for holding the flat tubes 11a to 11f are formed in flat panel-shaped clad metal at a predetermined interval apart from each other along the longitudinal direction of the flat panel-shaped clad metal by stamping.

Next, the first member 131, the second member 133, the flat panel-shaped clad metal having formed therein the holes for holding the flat tubes 11a to 11f, and the flat tubes 11a to 11f are assembled in such a way as to be positioned in this order.

Then, the flat panel-shaped clad metal is bent in such a way as to cover the second member 133 from outside along the shape of the second member 133, and both ends of the flat panel-shaped clad metal are brought into contact with, in such a way as to cover from outside, part of the first member 131 (specifically, the second portion 331b) and positioned in the recessed portion spaces S. Because of this, the flat tube holding member 132 whose transverse cross section has a "U" shape is formed.

Then, the flat tubes 11a to 11f are inserted into the flat tube-use holes 132a to 132f.

Then, these are joined together by brazing. Here, by using clad metal for the flat tube holding member 132 and joining the flat tube holding member 132 to the flat tubes 11a to 11f, leakage of the refrigerant to the outside from the refrigerant flow paths 112 in the flat tubes 11a to 11f can be prevented.

The first member 131 is given a configuration in which its upper and lower ends are closed by an upper end member and a lower end member (not shown in the drawings) having the same cross-sectional shape as that of the first member 131, and the upper end member and the lower end member are joined to the first member 131 by brazing.

Further, the second header 14 is joined to the other end portions of the flat tubes 11a to 11f in the same way as the first header 13. As described above, the heat exchanger 1 is manufactured.

(4) Flows of the Refrigerant

The series of flows of the refrigerant in the heat exchanger 1 having the above configuration will be briefly described.

(4-1) Flow of the Refrigerant in a Case Where the Heat Exchanger 1 Functions as an Evaporator

First, the refrigerant flowing toward the heat exchanger 1 from outside the first header 13 flows into the first header 13 via the opening 130. Here, the first header 13 functions as an inlet header into which the refrigerant flows from outside. The general flow of the refrigerant is such that the refrigerant that has flowed into the first header 13 travels through the refrigerant main flow path 131a formed in the first member 131, is distributed to the flat tubes 11f to 11a, and is substantially equally divided to the refrigerant flow paths 112 formed in the flat tubes 11f to 11a.

More specifically, the refrigerant that has flowed into the first header 13 travels through the refrigerant main flow path 131a formed in the first member 131 and is substantially equally distributed to the refrigerant connection flow paths 231f to 231a formed in the first member 131. The refrigerant that has flowed into the refrigerant connection flow paths 231f to 231a flows into the intermediate flow paths 133f to 133a formed in the second member 133. The refrigerant that has flowed into the intermediate flow paths 133f to 133a is substantially equally divided to the plural refrigerant flow paths 112 formed in the flat tubes 11f to 11a held in the flat tube holding member 132.

Then, the refrigerant that is equally divided to the refrigerant flow paths 112 flows toward the second header 14. The refrigerant that has merged inside the second header 14 flows out to the outside of the heat exchanger 1 via the opening 140.

As described above, in a case where the heat exchanger 1 functions as an evaporator, the refrigerant flows through the insides of the headers 13 and 14 from the lower space to the upper space.

(4-2) Flow of the Refrigerant in a Case Where the Heat Exchanger 1 Functions as a Condenser

In a case where the heat exchanger 1 functions as a condenser, the refrigerant flowing toward the heat exchanger 1 from outside the second header 14 flows into the second header 14 via the opening 140. Here, the second header 14 functions as an inlet header into which the refrigerant flows from outside.

Then, like the flow of the refrigerant in the case where the heat exchanger 1 functions as an evaporator, the refrigerant that has flowed into the second header 14 flows toward the first header 13. The refrigerant that has merged inside the first header 13 flows out to the outside of the heat exchanger 1 via the opening 130.

As described above, in a case where the heat exchanger 1 functions as a condenser, the refrigerant flows through the insides of the headers 13 and 14 from the upper space to the lower space.

Here, as shown in FIG. 3, a width W1 of the refrigerant connection flow paths 231a to 231f (specifically, a width W1 of the refrigerant connection flow path forming portions 233a to 233f) is the minimum dimension necessary for the refrigerant to travel through in order to enhance the pressure-resistant strength of the first member 131. Therefore, the width W1 of the refrigerant connection flow paths 231a to 231f (specifically, the refrigerant connection flow path forming portions 233a to 233f) is smaller than a width W2 (see FIG. 7) of the sections of the flat tubes 11a to 11f in which the refrigerant flow paths 112 are formed. Thus, here, the width W3 of the intermediate flow paths 133a to 133f (specifically, the intermediate flow path forming portions 134a to 134f forming the intermediate flow paths 133a to 133f) formed in the second member 133 is equal to or greater than the width W2 of the sections of the flat tubes 11a to 11f in which the refrigerant flow paths 112 are formed. Because of this, the exchange of the refrigerant between the first member 131 and the plural flat tubes 11a to 11f can be performed easily.

(5) Regarding the Refrigerant Main Flow Path 131a

The length L1 [m], in the direction orthogonal to the longitudinal direction of the first member 131, of the refrigerant main flow path forming portion 13a forming the refrigerant main flow path 131a can be decided using expression 1 below.

$$\text{(Expression 1)} \qquad\qquad\qquad :$$

$$\frac{4}{C_2 \cdot \pi} \frac{m \cdot x}{\rho_G g^{0.5}} \leq L1^2 D^{0.5} \leq \frac{4}{C_1 \cdot \pi} \frac{m \cdot x}{\rho_G g^{0.5}}$$

Here, $\pi$ is pi. g is gravitational acceleration [m/s$^2$]. m is the circulating volume [kg/s] of the refrigerant in a gas-liquid two-phase state flowing through the refrigerant main flow path 131a. x is inlet quality, which is the ratio of the mass flow rate of the refrigerant in a gas-phase state with respect to the total mass flow rate of the refrigerant in a gas-liquid two-phase state inside the first header 13 or the second header 14 functioning as the inlet header. $\rho_G$ is the density [kg/m$^3$] of the refrigerant in a gas-phase state flowing through the refrigerant main flow path 131a and, in the present embodiment, is a value decided by the evaporation temperature. D is the distance [m] between the upper surface of the uppermost flat tube 11a and the undersurface of the lowermost flat tube 11f (see FIG. 4). $C_1$ and $C_2$ are constants.

From the above expression 1, it will be understood that the length L1 is decided by the constants $C_1$ and $C_2$ and the distance D. The distance D is a value unequivocally decided in accordance with the type of the headers 13 and 14.

Here, the inventors of the present invention performed an experiment and discovered the constants $C_1$ and $C_2$ with which flow dividing ability becomes equal to or greater than a predetermined ability (in the present embodiment, 90%). "Flow dividing ability" is an ability indicating how equally the refrigerant can be allowed to flow from the refrigerant main flow path 131 a to the refrigerant connection flow paths 231a to 231f and therefore to the refrigerant flow paths 112 in the flat tubes 11a to 11 f; if the flow dividing ability is equal to or greater than 90%, it can be said that the flow dividing ability is high.

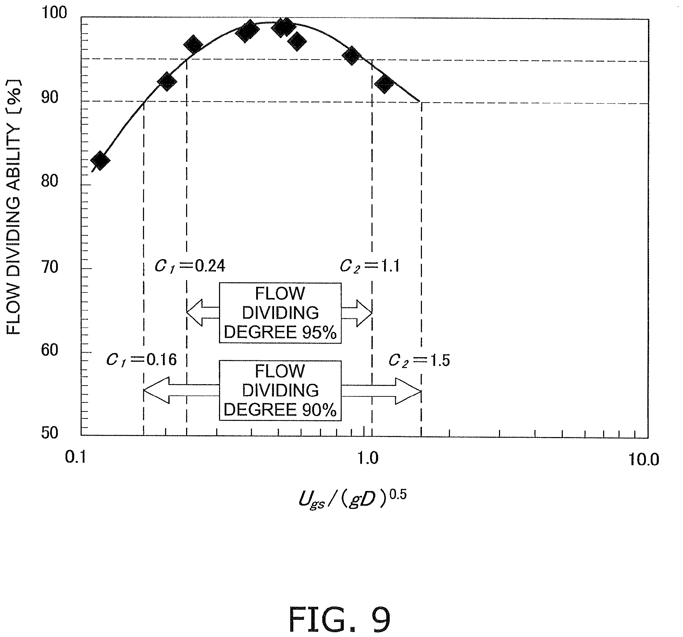

FIG. 9 is a graph showing the relationship between the constants $C_1$ and $C_2$ and the flow dividing ability that is the result of the experiment described above. The experiment that led to the graph of FIG. 9 was performed under the conditions that carbon dioxide refrigerant was used as the refrigerant, headers 13 and 14 in which D was 300 mm to 500 mm and L1 was 5 mm to 15 mm were used, the evaporation temperature was 0°C, and x was 0.2. The same results (that is, values of $C_1$ and $C_2$ with which the flow dividing ability is high) are obtained even if the experimental conditions (e.g., the evaporation temperature and the value of x) are changed somewhat.

In this experiment, a value calculated from expression 2 below is used as a substitute value of the constants $C_1$ and $C_2$ ($U_{gs}$ is gas speed).

$$(\text{Expression 2}):$$

$$\frac{U_{gs}}{(gD)^{0.5}}$$

This is because the relationship of expression 4 below can be derived when expression 1 above is divided by the gas speed $U_{gs}$ defined from expression 3 below.

$$(\text{Expression 3}):$$

$$U_{gs} = \frac{m \cdot x}{\rho_G (\frac{\pi L1^2}{4})}$$

$$(\text{Expression 4}):$$

$$C_1 \leq \frac{U_{gs}}{(gD)^{0.5}} \leq C_2$$

Looking at the graph of FIG. 9, the value of $C_1$ with which the flow dividing ability becomes equal to or greater than 90% is 0.16, and the value of $C_2$ is 1.5. Further, the value of $C_1$ with which the flow dividing ability becomes equal to or greater than 95% is 0.24, and the value of $C_2$ is 1.1.

Therefore, the value of L1 with which the flow dividing ability is high can be decided using expression 1 and the values of the constants $C_1$ and $C_2$ derived from the graph of FIG. 9.

For example, in a case where D is 500 mm, the evaporation temperature is 7°C ($\rho_G$ decided from this evaporation temperature becomes 122.3 kg/m³), x is 0.15, and m is 100 kg/hr, it suffices to design L1 in such a way that L1 becomes 3.6 mm to 11.0 mm if one wants to obtain a flow dividing ability of 90%, and it suffices to design L1 in such a way that L1 becomes 4.2 to 9.0 mm if one wants to obtain a flow dividing ability of 95%.

(6) Characteristics

(6-1)

For example, in a case where the flat tubes are inserted into the inside spaces of the headers through which the refrigerant mainly travels, there is concern that the pressure loss of the refrigerant will occur. Further, in a heat exchanger of this configuration, when joining together the flat tubes and the headers, it is assumed that brazing filler metal will flow into the headers from the end portions of the flat tubes. In this case, there is concern that the flow path through which the refrigerant mainly travels will end up being blocked as a result of brazing filler metal clogs or the like occurring.

Thus, in the present embodiment, the plural flat tubes 11a to 11f are held using the flat tube holding member 132 that is separate from the first member 131 having formed therein the refrigerant main flow path 131a through which the refrigerant mainly travels. Further, the intermediate flow paths 133a to 133f for allowing the refrigerant to flow from the plural flat tubes 11a to 11f to the refrigerant main flow path 131a and for allowing the refrigerant from the refrigerant main flow path 131a to flow to the flat tubes 11a to 11f are formed in the second member 133 that is separate from the first member 131, and the refrigerant connection flow paths 231a to 231f for allowing the refrigerant to flow from the refrigerant main flow path 131a to the intermediate flow paths 133a to 133f are formed in the first member 131. Therefore, a configuration in which the flat tubes 11a to 11f are not inserted into the refrigerant main flow path 131a is employed. Because of this, brazing filler metal clogs can be suppressed from occurring in the refrigerant main flow path 131a through which the refrigerant travels. Further, the pressure loss of the refrigerant can be suppressed.

Further, by employing this configuration, the diameter of the first header 13 and the refrigerant main flow path 131a do not have to be formed to match the width of the flat tubes 11a to 11f. That is, the length L1, in the direction orthogonal to the longitudinal direction of the first member 131, of the refrigerant main flow path forming portion 13a forming the refrigerant main flow path 131a (that is, the inner diameter of the refrigerant main flow path forming portion 13a) can be made smaller than the width W22 of the flat tubes 11a to 11f. Therefore, the diameter of the flow path through which the refrigerant mainly travels can be reduced and the pressure-resistant strength of the first header 13 can be improved. Moreover, because the diameter of the refrigerant main flow path 131a can be reduced, a drop in the flow speed of the refrigerant flowing through the refrigerant main flow path 131a can be suppressed and the flow dividing ability can be kept high.

(6-2)

In the present embodiment, the second member 133 has a flat panel shape. Holes can be formed easily in the second member 133, so the intermediate flow paths 133a to 133f can be formed easily. Therefore, it is easy for a constructor to execute construction.

(6-3)

The width W3 of the intermediate flow paths 133a to 133f (specifically, the intermediate flow path forming portions 134a to 134f) is equal to or less than the width W22 of the flat tubes 11a to 11f. Because of this, the longitudinal direction end surfaces of the flat tubes 11a to 11f can be placed in contact with the second member 133, and the positioning of the flat tubes 11a to 11f can be performed easily. That is, the flat tubes 11a to 11f can be easily secured in such a way that their longitudinal direction end surfaces are positioned in substantially the same position as the end surface of the second member 133 on the flat tube side of the second member 133 in the thickness direction of the second member 133. Further, because of this, spaces (that is, the intermediate flow paths 133a to 133f) can be easily formed between the first member 131 and the flat tubes 11a to 11f.

(6-4)

In the present embodiment, the width W3 of the intermediate flow path forming portions 134a to 134f is equal to or greater than the width W2 of the sections of the flat tubes 11a to 11f in which the refrigerant flow paths 112 are formed. Because of this, the width W1 of the refrigerant connection flow paths 231a to 231f can be set to the minimum dimension necessary for the refrigerant to travel through, and the pressure-resistant strength of the first header 13 improves.

(6-5)

In the present embodiment, the flat tube holding member 132 covers the second member 133 from outside, and both ends of the flat tube holding member 132 are in contact with and joined by brazing to the first member 131.

Here, the second member 133 can be easily secured by the flat tube holding member 132.

Further, in the present embodiment, the inwardly bent end portions of the flat tube holding member 132 are positioned in the recessed portion spaces S formed by the first portion 331a and the second portion 331b of the first member 131.

Here, because the recessed portion spaces S are formed by the first portion 331a and the second portion 331b of the first member 131, the securing of the flat tube holding member 132 can be performed easily.

(6-6)

In the present embodiment, clad metal different from other members (the flat tube holding member 132) is used for the second member 133. Specifically, the clad metal used for the second member 133 has a higher melting point than that of the clad metal used for other members.

This is to ensure that the brazing filler metal of the second member 133 does not flow to the end surfaces of the flat tubes 11a to 11f when joining together the second member 133 and the flat tube holding member 132 because the end surfaces of the flat tubes 11a to 11f are positioned between the second member 133 and the flat tube holding member 132. Therefore, brazing filler metal clogs in the refrigerant flow paths 112 formed in the flat tubes 11a to 11f can be suppressed.

(6-7)

In the present embodiment, the first member 131, the second member 133, and the flat tube holding member 132 are configured from clad metal, so it is not necessary to use separate brazing filler metals when a constructor brazes these. Therefore, the number of man-hours in the brazing work can be reduced and costs can be suppressed.

(6-8)

In the present embodiment, the length L1, in the direction orthogonal to the longitudinal direction of the first member 131, of the refrigerant main flow path forming portion 13a forming the refrigerant main flow path 131a with which the flow dividing ability becomes higher can be easily arrived at from expression 1 above. Specifically, L1 with which the flow dividing ability becomes higher is arrived at by deriving, from the graph shown in FIG. 9, the values of the constants $C_1$ and $C_2$ with which the flow dividing ability becomes higher.

(7) Modifications

(7-1) Modification 1A

An embodiment of the present invention has been described above on the basis of the drawings, but the specific configurations thereof are not limited to those in the above-described embodiment and can be changed without departing from the gist of the invention.

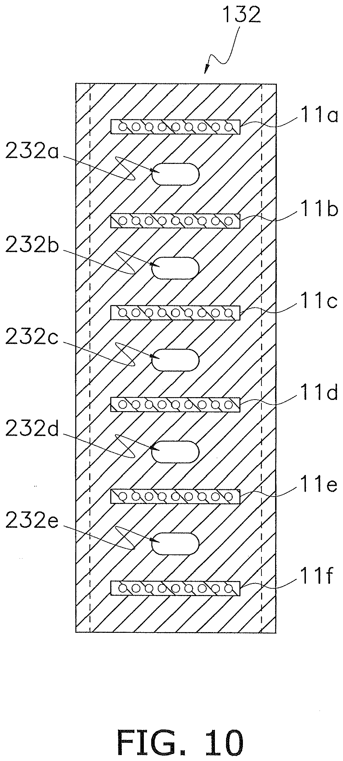

FIG. 10 is a longitudinal cross-sectional view showing the flat tube holding member 132 pertaining to a modification.
In the above-described embodiment, only the flat tube-use holes 132a to 132f are formed in the flat tube holding member 132, but the present invention is not limited to this.
In addition to the flat tube-use holes 132a to 132f, plural holes 232a to 232e may also be formed in the flat tube holding member 132.
Here, although it is not mentioned above, when joining together the flat tube holding member 132 and the flat tubes 11a to 11f and joining together the flat tube holding member 132 and the second member 133, a flux is applied and thereafter these are connected by brazing or the like. Therefore, when performing the brazing, it is assumed that the flux will volatilize.
Therefore, by forming the plural holes 232a to 232e in the flat tube holding member 132, it becomes easier to remove volatilized gas, so airtightness between the flat tube holding member 132 and the flat tubes 11a to 11f and between the flat tube holding member 132 and the second member 133 can be ensured.

(7-2) Modification 1B

In the above-described embodiment, the second member 133 is described as being disposed between the first member 131 and the flat tube holding member 132, but the present invention is not limited to this and the second member 133 does not have to be disposed. That is, a configuration in which the end surface of the first member 131 on the flat tube holding member side and the end surface of the flat tube holding member 132 on the first member side are in contact with each other may also be employed.
In modifications 1C to 1G below, employable configurations of the headers 13 and 14 (below, only the first header 13 is indicated) and the flat tubes 11a to 11f in this case will be described.

(7-3) Modification 1C

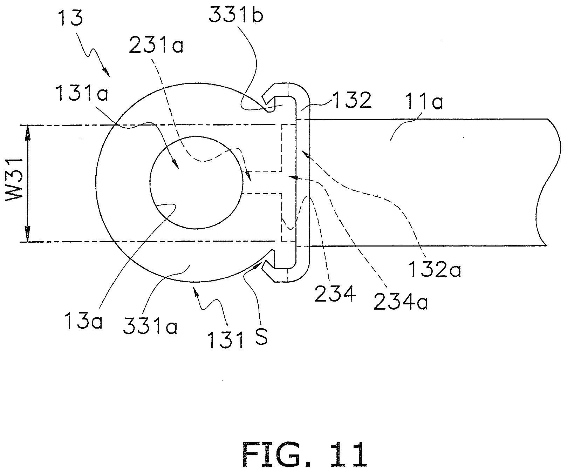

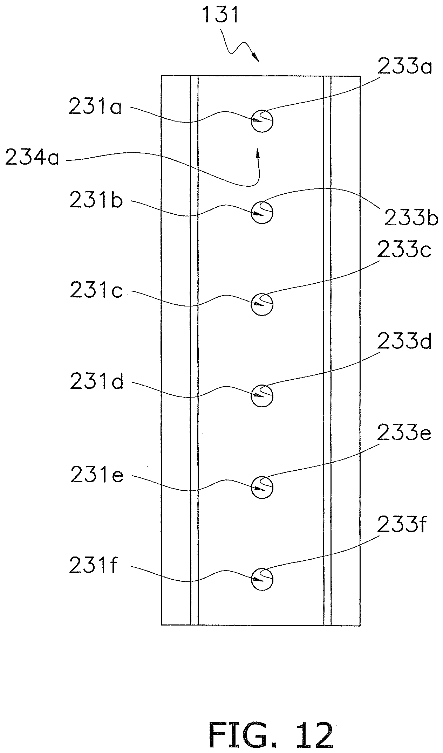

FIG. 11 is a plan view, pertaining to the present modification 1C, of the first header 13 and the flat tubes 11a to 11f in a case where the upper end member has been removed. FIG. 12 is a side view, pertaining to the present modification 1C, of the first member 131 as seen from the side of the flat tubes 11a to 11f.
In the heat exchanger 1 pertaining to the present modification 1C, as shown in FIG. 11 and FIG. 12, a recessed portion 234a that is inwardly recessed across the vertical direction of the first member 131 is formed in the end portion of the first member 131 on the flat tube holding member side. The recessed portion 234a functions as the intermediate flow paths 133a to 133f of the above-described embodiment. That is, a recessed portion forming portion 234 forming the recessed portion 234a corresponds to the intermediate flow path forming portions 134a to 134f of the above-described embodiment.

In the heat exchanger 1 pertaining to the present modification 1C, even in a case where the second member 133 is not disposed between the first member 131 and the flat tube holding member 132, effects that are the same as those of the above-described embodiment can be expected because the recessed portion 234a having the function of the intermediate flow paths 133a to 133f is formed in the first member 131. Further, a width W31 of the recessed portion forming portion 234 is, like in the above-described embodiment, equal to or less than the width W22 of the flat tubes 11a to 11f, so when connecting the flat tubes 11a to 11 f to the headers 13 and 14, the longitudinal direction end surfaces of the flat tubes 11a to 11f come into contact with the first member (specifically, the periphery of the recessed portion forming portion 234). Because of this, the positioning of the flat tubes 11a to 11f can be performed easily.

(7-4) Modification 1D

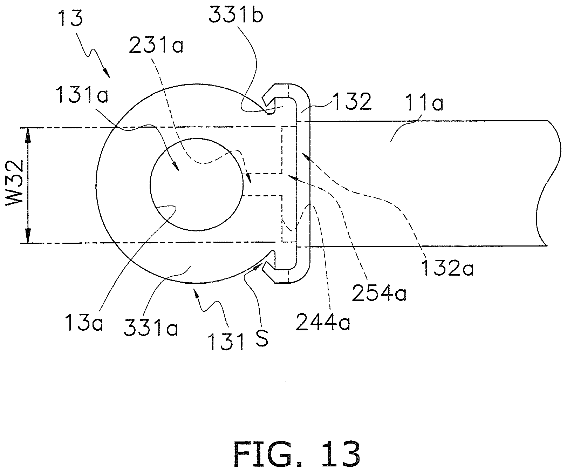

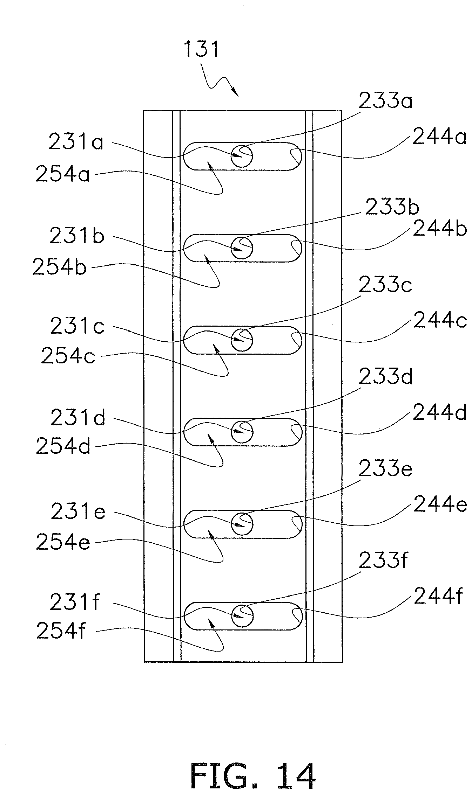

FIG. 13 is a plan view, pertaining to the present modification 1D, of the first header 13 and the flat tubes 11a to 11f in a case where the upper end member has been removed. FIG. 14 is a side view, pertaining to the present modification 1D, of the first member 131 as seen from the side of the flat tubes 11 a to 11f.

In the heat exchanger 1 pertaining to the present modification 1D, as shown in FIG. 14, recessed portions 254a to 254f that are inwardly recessed are formed in the end portion of the first member 131 on the flat tube holding member side only in positions corresponding to the height positions of the flat tubes 11a to 11f (specifically, substantially the same height positions). That is, in the first member 131 pertaining to the present modification 1D, plural recessed portions 254a to 254f are formed. The recessed portions 254a to 254f function as the intermediate flow paths 133a to 133f of the above-described embodiment. That is, recessed portion forming portions 244a to 244f forming the recessed portions 254a to 254f correspond to the intermediate flow path forming portions 134a to 134f of the above-described embodiment.

Therefore, in the heat exchanger 1 pertaining to the present modification 1D, even in a case where the second member 133 is not disposed between the first member 131 and the flat tube holding member 132, effects that are the same as those of the above-described embodiment can be expected because the recessed portions 254a to 254f having the function of the intermediate flow paths 133a to 133f are formed in the first member 131. Further, a width W32 of the recessed portion forming portions 244a to 244f is equal to or less than the width W22 of the flat tubes 11a to 11f, so effects that are the same as those of modification 1C are also achieved.

(7-5) Modification 1E

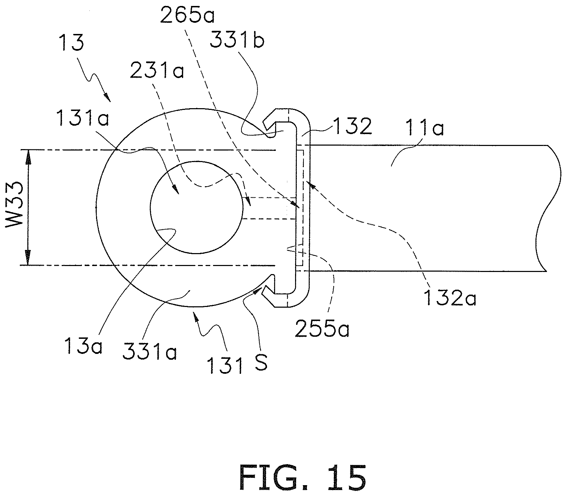

FIG. 15 is a plan view, pertaining to the present modification 1E, of the first header 13 and the flat tubes 11a to 11f in a case where the upper end member has been removed.

In the heat exchanger 1 pertaining to the present modification 1E, as shown in FIG. 15, recessed portions that are inwardly recessed are formed in the end portions of the flat tubes 11a to 11f on the first member side (in FIG. 15, of the recessed portions formed in the flat tubes 11a to 11f, only a recessed portion 265a formed in the flat tube 11 a is shown). The recessed portions function as the intermediate flow paths 133a to 133f of the above-described embodiment. That is, recessed portion forming portions forming the recessed portions (in FIG. 15, of the recessed portion forming portions formed in the flat tubes 11a to 11f, only a recessed portion forming portion 255a formed in the flat tube 11a is shown) correspond to the intermediate flow path forming portions 134a to 134f of the above-described embodiment.

In the heat exchanger 1 pertaining to the present modification IE, even in a case where the second member 133 is not disposed between the first member 131 and the flat tube holding member 132, effects that are the same as those of the above-described embodiment can be expected because the recessed portions having the function of the intermediate flow paths 133a to 133f are formed in the flat tubes 11a to 11f. Further, a width W33 of the recessed portion forming portions is, like in the above-described embodiment, equal to or less than the width W22 of the flat tubes 11a to 11f. Therefore, when connecting the flat tubes 11 a to 11 f to the headers 13 and 14, the longitudinal direction end surfaces of the flat tubes 11a to 11f come into contact with the first member 131. Because of this, the positioning of the flat tubes 11a to 11f can be performed easily.

(7-6) Modification 1F

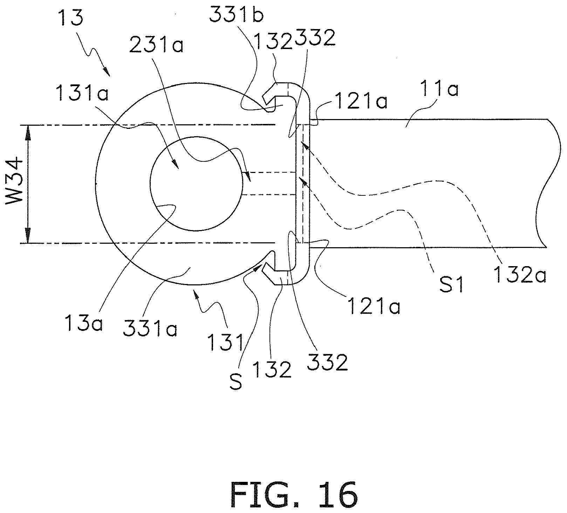

FIG. 16 is a plan view, pertaining to the present modification 1F, of the first header 13 and the flat tubes 11a to 11f in a case where the upper end member has been removed.

In the heat exchanger 1 pertaining to the present modification IF, as shown in FIG. 16, both longitudinal direction end portions of the flat tubes 11a to 11f have convex shapes as seen in a plan view. Specifically, the flat tubes 11 a to 11 f have corner portions (in FIG. 16, only a corner portion 121a of the flat tube 11a is shown) cut squarely as seen in a plan view. The outer surfaces of the corner portions of the flat tubes 11 a to 11 f are in contact with the flat tube holding member 132 (specifically, the outer surfaces of the corner portions of the flat tubes 11a to 11f are in contact with the outer surface of the flat tube holding member 132 and the inner surfaces of the sections forming the flat tube-use holes 132a to 132f).

Further, the corner portions of the flat tubes 11a to 11f are formed in such a way that, in a state in which the outer surfaces of the corner portions of the flat tubes 1 1a to 11f are in contact with the flat tube holding member 132, a space S1 is formed between the flat tube holding member 132, the flat tubes 11a to 11f, and the first member 131. Additionally, this space S1 functions as the intermediate flow paths 133a to 133f of the above-described embodiment. A longitudinal direction width W34 of the space S1 (that is, the distance between sections 332 of the flat tube holding member 132 that form the space S1) is smaller than the width W22 of the flat tubes 11a to 11f.

As described above, in the heat exchanger 1 pertaining to the present modification 1F, even in a case where the second member 133 is not disposed between the first member 131 and the flat tube holding member 132, effects that are the same as those of the above-described embodiment can be expected because the space S1 functions as the intermediate flow paths 133a to 133f. Further, the positioning of the flat tubes 11a to 11f can be performed easily.

(7-7) Modification 1G

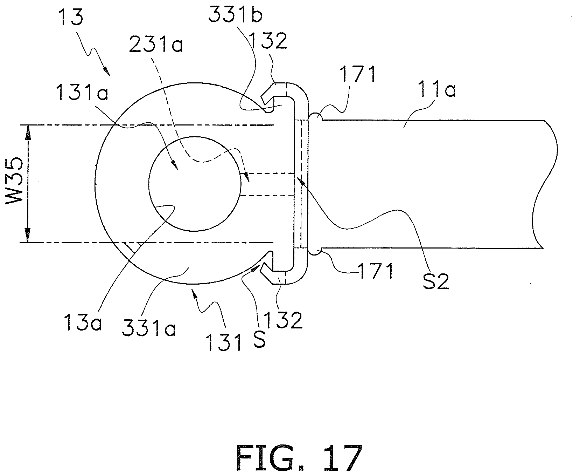

FIG. 17 is a plan view, pertaining to the present modification 1G, of the first header 13 and the flat tubes 11a to 11f in a case where the upper end member has been removed.

In the heat exchanger 1 pertaining to the present modification 1G, as shown in FIG. 17, convex portions 171 are formed on both width direction end portions of both longitudinal direction end portions of the flat tubes 11a to 11f. The outer surfaces of the convex portions 171 opposing the flat tube holding member 132 are in contact with the flat tube holding member 132 in a state in which the flat tubes 11a to 11f are positioned in their regular positions. The convex portions 171 are formed in positions such that a space S2 is formed between the flat tube holding member 132, the flat tubes 11a to 11f, and the first member 131 in a state in which the flat tubes 11a to 11f are positioned in their regular positions. The space S2 functions as the intermediate flow paths 133a to 133f of the above-described embodiment. In this state, a longitudinal direction width W35 of the space S2 is the same as the width W22 of the flat tubes 11 a to 11f.

As described above, in the heat exchanger 1 pertaining to the present modification 1G, because of the convex portions 171, the positioning of the flat tubes 11a to 11f can be performed easily and effects that are the same as those of the above-described embodiment are also achieved.

(7-8) Modification 1H

In the above-described embodiment, the length, in the direction orthogonal to the longitudinal direction of the headers 13 and 14, of the refrigerant main flow path forming portions forming the refrigerant main flow paths in the headers 13 and 14 is the same from the upper ends to the lower ends of the headers 13 and 14, but the present invention is not limited to this.

For example, the length of the header through which liquid refrigerant flows may also be made smaller than the length of the header through which gas refrigerant flows. Because of this, a drop in the refrigerant flow speed of the liquid refrigerant can be suppressed and the flow dividing ability can be improved.

<Second Embodiment>

Next, a second embodiment will be described. In the description below, the same reference signs will be given to components and so forth that are the same as those in the first embodiment and description will be omitted.

That which mainly differs in the second embodiment from the first embodiment is that a securing member 210 for more stably securing the flat tubes 11a to 11f is interposed between the flat tube holding member 132 and the second member 133. Therefore, the securing member 210 will be described below.

(1) Securing Member 210

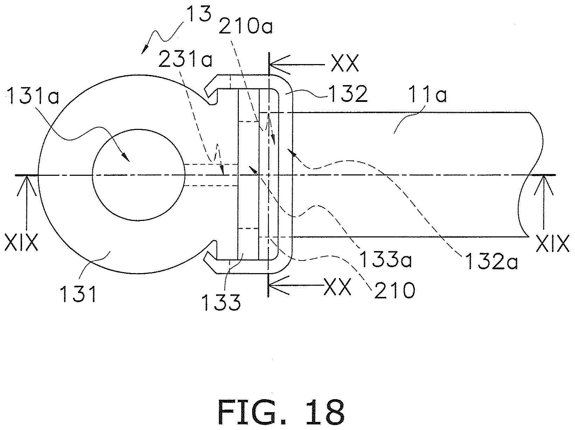

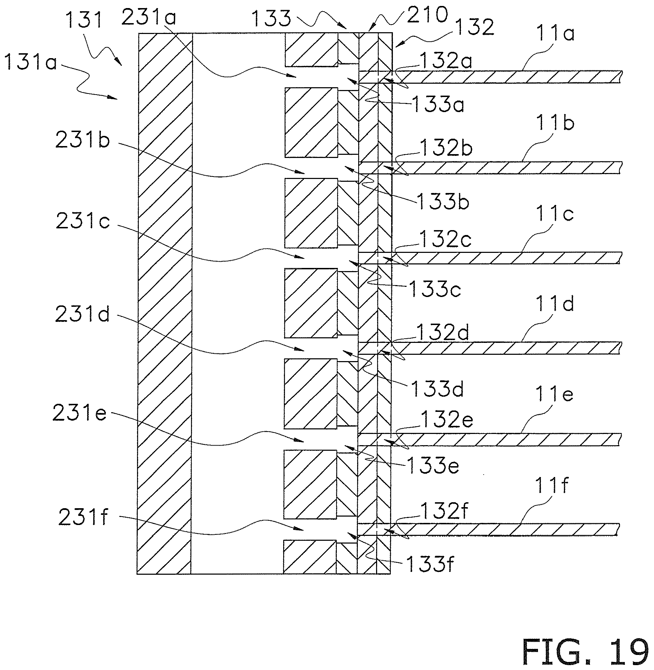

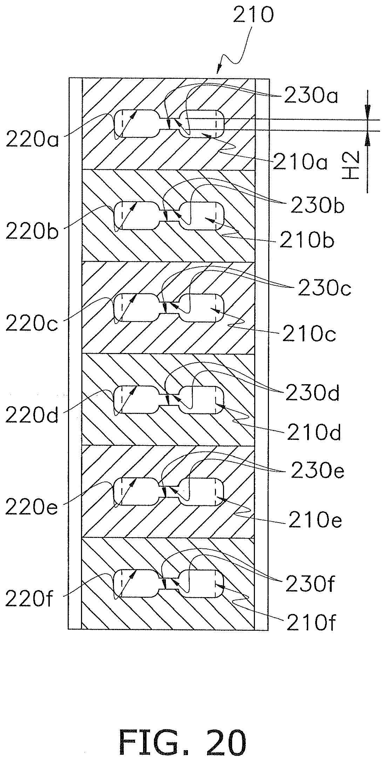

FIG. 18 is a plan view of the first header 13 and the flat tubes 11a to 11f in a case where the upper end member has been removed. FIG. 19 is a longitudinal cross-sectional view in a case where the first header 13 and the flat tubes 11a to 11f in a case where the upper end member and the lower end member have been removed are cut along line XIX-XIX shown in FIG. 18. FIG. 20 is a longitudinal cross-sectional view in a case where the securing member 210 is cut along line XX-XX shown in FIG. 18.

As shown in FIG. 18 and FIG. 19, the securing member 210 is sandwiched between the flat tube holding member 132 and the second member 133. Further, the securing member 210 has the role of securing the end portions of the plural flat tubes 11a to 1 1f together with the flat tube holding member 132. The securing member 210 is configured from a metal member such as clad metal and has a long and narrow flat panel shape extending in the vertical direction.

As shown in FIG. 20, plural flat tube securing holes 210a to 210f having long and narrow shapes in the width direction of the securing member 210 are formed in the securing member 210 at predetermined intervals apart from each other along the longitudinal direction of the securing member 210. Specifically, the flat tube securing holes 210a to 210f are formed by flat tube securing hole forming portions 220a to 220f of the securing member 210. The flat tube securing hole forming portions 220a to 220f have projecting portions 230a to 230f at which both height direction edges of each of the flat tube securing hole forming portions 220a to 220f become closer to each other. A height direction length H2 of the spaces formed by the projecting portions 230a to 230f is smaller than the thickness of the flat tubes 11 a to 11 f. Because of this, the flat tubes 11 a to 11 f are held. The flat tube securing holes 210a to 210f are formed by stamping.

The method of manufacturing the heat exchanger 1 of the second embodiment is substantially the same as that of the first embodiment simply as a result of adding, to the process of the method of manufacturing the heat exchanger 1 of the first embodiment, forming the securing member 210, joining together the second member 133 and the securing member 210, and joining together the securing member 210 and the flat tube holding member 132.

(2) Characteristics

(2-1)

In the second embodiment, by interposing the securing member 210 between the flat tube holding member 132 and the second member 133, the flat tubes 11a to 11f can be more stably secured. Further, by interposing the securing member 210, the sections of the flat tubes 11a to 11f inserted into the first header 13 can be changed in the range of the thickness of the securing member 210. Therefore, when joining together the first header 13 and the flat tubes 11a to 11f, inflow of the brazing filler metal from the second member 133 into the refrigerant flow paths 112 formed in the flat tubes 11a to 11f can be suppressed.

(2-2)

The securing member 210 has a flat panel shape as described above. Because of this, the flat tube securing holes 210a to 210f can be easily formed in the securing member 210. Therefore, it is easy for a constructor to execute construction.

(2-3)

The flat tube holding member 132 in the second embodiment covers the securing member 210 from outside in addition to the second member 133, so not just the second member 133 but also the securing member 210 can be easily secured.

## INDUSTRIAL APPLICABILITY

The present invention is applicable to a variety of heat exchangers configured from headers that extend in a vertical direction and plural flat tubes that extend in a direction orthogonal to the length of the headers and are inserted into the headers.

## REFERENCE SIGNS LIST

| | |
|---|---|
| 1 | Heat Exchanger |
| 11a to 11f | Flat Tubes |
| 13, 14 | Headers |
| 112 | Refrigerant Flow Paths in Flat Tubes |
| 131 | First Member |
| 131a | Refrigerant Main Flow Path (Main Flow Path) |
| 132 | Flat Tube Holding Member |
| 133 | Second Member |
| 133a to 133f | Intermediate Flow Paths |
| 210 | Securing Member |
| 231a to 231f | Refrigerant Connection Flow Paths |
| W1 | Width of Refrigerant Connection Flow Paths |

W2                Width of Sections of Flat Tubes in Which Refrigerant Flow Paths are Formed
W3                Width of Intermediate Flow Paths

**Claims**

1. A heat exchanger (1) comprising:

   a pair of headers (13, 14) inside of which refrigerant flows; and
   plural flat tubes (11a to 11f) that extend in a direction intersecting a longitudinal direction of the headers and are connected to the headers at different height positions,
   wherein each of the headers has

   a first member (131) having formed therein a main flow path (131a), which is arranged to extend in the up-and-down direction and through which the refrigerant flows, and refrigerant connection flow paths (231a to 231f), which extend from the main flow path to an end surface in the direction in which the flat tubes are positioned in order to circulate the refrigerant between the main flow path and plural refrigerant flow paths (112) formed in the flat tubes, and
   a flat tube holding member (132) to which end portions of the flat tubes are adhered and which holds the flat tubes, and

   intermediate flow paths (133a to 133f) that interconnect the refrigerant connection flow paths and the plural refrigerant flow paths in the flat tubes are formed in the headers and/or the flat tubes,
   wherein the first member (131) has a first portion (331a), which extends in the vertical direction and has a shape in transverse cross section having a circular arc and in which shape end portions of that circular arc are joined by a straight line; a second portion (331b), which has an elongated flat shape extending in the vertical direction; and recessed portion spaces (S) formed by the first portion (331a) and the second portion (331b), wherein the cross section of the first member (131) orthogonal to the longitudinal direction of the first member (131) is $\Omega$-shaped,
   wherein the flat tube holding member (132) is bent inward in such a way as to cover both width direction end portions of the second portion (331b) of the first member (131),
   **characterized in that** the inwardly bent end portions of the flat tube holding member (132) are positioned in the recessed portion spaces (S),
   and **in that** the headers (13,14) are arranged to extend in an up-and-down direction.

2. The heat exchanger according to claim 1, wherein the width of the intermediate flow paths is equal to or less than the width (W22) of the flat tubes.

3. The heat exchanger according to claim 1 or 2, wherein
   each of the headers further has a second member (133) that is sandwiched between the first member and the flat tube holding member, and
   in a case where the intermediate flow paths are formed in the headers and the flat tubes or the headers, the intermediate flow paths are formed in the second member.

4. The heat exchanger according to claim 3, further comprising a securing member (210) that is sandwiched between the flat tube holding member and the second member and secures the end portions of the plural flat tubes together with the flat tube holding member.

5. The heat exchanger according to claim 4, wherein the second member and the securing member have flat panel shapes.

6. The heat exchanger according to claim 4 or 5, wherein the flat tube holding member covers the second member or the second member and the securing member from outside, and both ends of the flat tube holding member are in contact with and brazed to the first member.

7. The heat exchanger according to any one of claims 1 to 6, wherein plural holes are formed in the flat tube holding member.

8. The heat exchanger according to any one of claims 1 to 7, wherein the length, in a direction orthogonal to a longitudinal direction of the first member, of a main flow path forming portion forming the main flow path is smaller than the width of the flat tubes.

9. The heat exchanger according to any one of claims 1 to 8, wherein the first member (131) is formed by extruding processing.

10. The heat exchanger according to any one of claims 1 to 9, wherein the thickness of the first member (131) is 3 mm to 6 mm.

**Patentansprüche**

1. Wärmetauscher (1), umfassend:

ein Paar Sammler (13, 14), in welchen Kältemittel fließt; und
mehrere Flachrohre (11a bis 11f), die sich in einer Richtung erstrecken, die eine Längsrichtung der Sammler schneidet, und die mit den Sammlern an unterschiedlichen Höhenpositionen verbunden sind,
wobei jeder der Sammler

ein erstes Element (131) aufweist, in dem ein Hauptflusspfad (131a) gebildet ist, der eingerichtet ist, um sich in eine Aufwärts- und Abwärtsrichtung zu erstrecken und durch den das Kältemittel fließt, und Kältemittelverbindungsflusspfade (231a bis 231f), die sich von dem Hauptflusspfad zu einer Endoberfläche in der Richtung erstrecken, in der die Flachrohre positioniert sind, um das Kältemittel zwischen dem Hauptflusspfad und mehreren Kältemittelflusspfaden (112), die in den Flachrohren gebildet sind, zu zirkulieren, und
ein Flachrohrhalteelement (132), an dem Endabschnitte der Flachrohre haften und das die Flachrohre hält, und

Zwischenflusspfade (133a bis 133f), die die Kältemittelverbindungsflusspfade miteinander verbinden, und die mehreren Kältemittelflusspfade in den Flachrohren in den Sammlern und/oder den Flachrohren gebildet sind, wobei das erste Element (131) einen ersten Abschnitt (331a) aufweist, der sich in der vertikalen Richtung erstreckt und eine Form im Querschnitt aufweist, die einen Kreisbogen aufweist, und wobei Formendabschnitte dieses Kreisbogens durch eine gerade Linie verbunden sind; einen zweiten Abschnitt (331b), der eine gestreckte flache Form aufweist, die sich in der vertikalen Richtung erstreckt; und vertiefte Abschnitträume (S), die von dem ersten Abschnitt (331a) und dem zweiten Abschnitt (331b) gebildet werden, wobei der Querschnitt des ersten Elements (131) orthogonal zu der Längsrichtung des ersten Elements (131) $\Omega$-förmig ist,
wobei das Flachrohrhalteelement (132) derart nach innen gebogen ist, dass beide Breitenrichtungsendabschnitte des zweiten Abschnitts (331b) des ersten Elements (131) abgedeckt sind,
**dadurch gekennzeichnet, dass** die nach innen gebogenen Endabschnitte des Flachrohrhalteelements (132) in den vertieften Abschnitträumen (S) positioniert sind,
und dadurch, dass die Sammler (13, 14) eingerichtet sind, um sich in eine Aufwärts- und Abwärtsrichtung zu erstrecken.

2. Wärmetauscher nach Anspruch 1, wobei die Breite der Zwischenflusspfade gleich oder kleiner ist als die Breite (W22) der Flachrohre.

3. Wärmetauscher nach Anspruch 1 oder 2, wobei
jeder der Sammler weiter ein zweites Element (133) aufweist, das zwischen dem ersten Element und dem Flachrohrhalteelement liegt, und
in einem Fall, dass die Zwischenflusspfade in den Sammlern und den Flachrohren oder den Sammlern gebildet sind, die Zwischenflusspfade in dem zweiten Element gebildet sind.

4. Wärmetauscher nach Anspruch 3, der weiter ein Sicherungselement (210) umfasst, das zwischen dem Flachrohrhalteelement und dem zweiten Element liegt und die Endabschnitte der mehreren Flachrohre gemeinsam mit dem Flachrohrhalteelement sichert.

5. Wärmetauscher nach Anspruch 4, wobei das zweite Element und das Sicherungselement flache Plattenformen aufweisen.

**6.** Wärmetauscher nach Anspruch 4 oder 5, wobei das Flachrohrhalteelement das zweite Element oder das zweite Element und das Sicherungselement von außen her abdeckt, und beide Enden des Flachrohrhalteelements miteinander in Kontakt und an das erste Element hartgelötet sind.

**7.** Wärmetauscher nach einem der Ansprüche 1 bis 6, wobei mehrere Löcher in dem Flachrohrhalteelement gebildet sind.

**8.** Wärmetauscher nach einem der Ansprüche 1 bis 7, wobei die Länge, in einer Richtung orthogonal zu einer Längsrichtung des ersten Elements, eines Hauptflusspfadbildungsabschnitts, der den Hauptflusspfad bildet, kleiner ist als die Breite der Flachrohre.

**9.** Wärmetauscher nach einem der Ansprüche 1 bis 8, wobei das erste Element (131) durch Extrusionsverarbeitung gebildet ist.

**10.** Wärmetauscher nach einem der Ansprüche 1 bis 9, wobei die Stärke des ersten Elements (131) 3 mm bis 6 mm beträgt.

**Revendications**

**1.** Échangeur de chaleur (1) comprenant :

une paire de collecteurs (13, 14) à l'intérieur desquels du réfrigérant s'écoule ; et
plusieurs tubes plats (11a à 11f) qui s'étendent dans une direction croisant une direction longitudinale des collecteurs et sont raccordés aux collecteurs dans différentes positions verticales,
dans lequel chacun des collecteurs présente
un premier élément (131) présentant formé sur celui-ci un trajet de flux principal (131a) qui est agencé pour s'étendre dans la direction de haut en bas et au travers duquel le réfrigérant s'écoule, et des trajets de flux de connexion de réfrigérant (231a à 231f) qui s'étendent depuis le trajet de flux principal à une surface d'extrémité dans la direction dans laquelle les tubes plats sont positionnés afin de faire circuler le réfrigérant entre le trajet de flux principal et plusieurs trajets de flux de réfrigérant (112) formés dans les tubes plats, et
un élément de maintien de tube plat (132) auquel des portions d'extrémité des tubes plats sont collées et qui maintient les tubes plats, et
des trajets de flux intermédiaire (133a à 133f) qui raccordent les trajets de flux de connexion de réfrigérant et les plusieurs trajets de flux de réfrigérant dans les tubes plats sont formés dans les collecteurs et/ou les tubes plats,
dans lequel le premier élément (131) présente une première portion (331a) qui s'étend dans la direction verticale et présente une forme en section transversale présentant un arc circulaire et dans laquelle forme des portions d'extrémité de cet arc circulaire sont jointes par une ligne droite ; une seconde portion (331b) qui présente une forme plate allongée s'étendant dans la direction verticale ; et des espaces de portion évidés (S) formés par la première portion (331a) et la seconde portion (331b), dans lequel la section transversale du premier élément (131) orthogonale à la direction longitudinale du premier élément (131) est en forme de $\Omega$,
dans lequel l'élément de maintien de tube plat (132) est plié vers l'intérieur de manière à couvrir les deux portions d'extrémité de direction de largeur de la seconde portion (331b) du premier élément (131),
**caractérisé en ce que** les portions d'extrémité pliées vers l'intérieur de l'élément de maintien de tube plat (132) sont positionnées dans les espaces de portion évidés (S),
et **en ce que** les collecteurs (13, 14) sont agencés pour s'étendre dans une direction de haut en bas.

**2.** Échangeur de chaleur selon la revendication 1, dans lequel la largeur des trajets de flux intermédiaire est égale à ou inférieure à la largeur (W22) des tubes plats.

**3.** Échangeur de chaleur selon la revendication 1 ou 2, dans lequel
chacun des collecteurs présente en outre un second élément (133) qui est pris en sandwich entre le premier élément et l'élément de maintien de tube plat, et
dans un cas où les trajets de flux intermédiaire sont formés dans les collecteurs et les tubes plats ou les collecteurs, les trajets de flux intermédiaire sont formés dans le second élément.

**4.** Échangeur de chaleur selon la revendication 3, comprenant en outre un élément de fixation (210) qui est pris en sandwich entre l'élément de maintien de tube plat et le second élément et fixe les portions d'extrémité des plusieurs tubes plats conjointement avec l'élément de maintien de tube plat.

**5.** Échangeur de chaleur selon la revendication 4, dans lequel le second élément et l'élément de fixation présentent des formes de panneau plat.

**6.** Échangeur de chaleur selon la revendication 4 ou 5, dans lequel l'élément de maintien de tube plat couvre le second élément ou le second élément et l'élément de fixation de l'extérieur, et les deux extrémités de l'élément de maintien de tube plat sont en contact avec et brasées au premier élément.

**7.** Échangeur de chaleur selon l'une quelconque des revendications 1 à 6, dans lequel plusieurs trous sont formés dans l'élément de maintien de tube plat.

**8.** Échangeur de chaleur selon l'une quelconque des revendications 1 à 7, dans lequel la longueur, dans une direction orthogonale à une direction longitudinale du premier élément, d'une portion formant trajet de flux principal formant le trajet de flux principal est inférieure à la largeur des tubes plats.

**9.** Échangeur de chaleur selon l'une quelconque des revendications 1 à 8, dans lequel le premier élément (131) est formé par traitement par extrusion.

**10.** Échangeur de chaleur selon l'une quelconque des revendications 1 à 9, dans lequel l'épaisseur du premier élément (131) est de 3 mm à 6 mm.

EP 2 623 915 B1

11a
11b
11c
11d
11e
11f

1

140      152

⇔ REFRIGERANT

12

II

REFRIGERANT ⇔

151   130

13

14

FIG. 1

FIG. 2

EP 2 623 915 B1

FIG. 3

FIG. 4

131

233a
231a
231b — 233b
233c
231c
233d
231d
233e
231e
233f
231f

H1

FIG. 5

FIG. 6

## FIG. 7

FIG. 8

FIG. 9

EP 2 623 915 B1

FIG. 10

29

FIG. 11

FIG. 12

FIG. 13

FIG. 14

FIG. 15

FIG. 16

EP 2 623 915 B1

FIG. 17

FIG. 18

EP 2 623 915 B1

FIG. 19

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006284133 A
- JP 2010139088 A
- EP 2108909 A1
- US 20080223566 A1